# EUROPEAN PATENT APPLICATION

(11) **EP 3 147 792 A1**
(43) Date of publication of application: **29.03.2017**
(21) Application number: 15811543.6
(22) Date of filing: 26.06.2015
(51) Int. Cl.: G06F 13/14

(54) **METHOD FOR ACCESSING NVME STORAGE DEVICE, AND NVME STORAGE DEVICE**

(30) Priority: 27.06.2014 CN 201410305089
(71) Applicant: Huawei Technologies Co. Ltd., Shenzhen, Guangdong 518129 (CN)
(72) Inventor: GUO, Haitao, Shenzhen Guangdong 518129 (CN); CHANG, Sheng, Shenzhen Guangdong 518129 (CN); YU, Zhou, Shenzhen Guangdong 518129 (CN)
(74) Representative: Kreuz, Georg Maria
(86) International application number: PCT/CN2015/082540
(87) International publication number: WO 2015/197027

(57) **Abstract**

A method for accessing an NVMe storage device and an NVMe storage device are disclosed, which resolves problems in power supply and distribution, heat dissipation, space, and the like of an NVMe storage device. The method includes: receiving, by a control module, an access request message in a PCIe protocol format sent by a CPU (401); converting the access request message in the PCIe protocol format into an access request message in a second protocol format (402); sending the access request message in the second protocol format to a storage module (403); converting, by the storage module, the access request message in the second protocol format into an access request message in a third protocol format (404); acquiring the operation instruction and access address information that is of the CPU from the access request message in the third protocol format; and accessing a storage unit in the storage module according to the operation instruction and the access address information that is of the CPU (405). The method is applicable to the field of storage technologies.

## Description

### TECHNICAL FIELD

The present invention relates to the field of storage technologies, and in particular, to a method for accessing an NVMe storage device and an NVMe storage device.

### BACKGROUND

In a current network application scenario, Peripheral Component Interconnect Express (English: Peripheral Component Interconnect express, PCIe) is the latest bus and interface standard, and is for high-speed, serial, point-to-point, dual-channel, and high-bandwidth transmission. PCIe represents a next-generation input/output I/O interface standard.

A PCIe solid-state storage device (such as a solid state disk (English: Solid State Disk, SSD)) refers to a solid-state storage device connected to a PCIe interface of a central processing unit (English: Central Processing Unit, CPU for short) and is generally used as a level 1 cache and a level 2 cache. The PCIe solid-state storage device is intermixed with a conventional hard disk to form tiered storage, implementing that data is automatically migrated between the solid-state storage device and the conventional hard disk, data that is not frequently accessed is automatically migrated to a level with a lower storage level, that is the conventional hard disk, and higher-level storage space, that is, storage space of the solid-state storage device, is released for data that is more frequently accessed, so that system storage performance is accelerated.

The Non-Volatile Memory Express (English: Non-Volatile Memory Express, NVMe) standard is a storage controller interface standard developed for enterprises and common client systems that use PCIe SSDs. A memory in an NVMe architecture has characteristics of low energy consumption and high performance. In a current memory architecture, technical implementation of NVMe is as follows:
In terms of hardware, an NVMe storage device is directly connected to a PCIe interface of a central processing unit (English: Center Processing Unit, CPU), instead of using a Serial Advanced Technology Attachment (English: Serial Advanced Technology Attachment, SATA) interface and a serial attached small computer system interface (English: Serial Attached Small Computer System Interface, SAS), so that protocol overheads on a host bus adapter (English: Host Bus Adapter, HBA) is reduced.

In terms of software, a drive of an NVMe storage device is directly connected to a block device layer of an operating system (English: Operating System, OS), and an OS access request queue, enqueue/dequeue scheduling, and a Small Computer System Interface (English: Small Computer System Interface, SCSI) layer are not used, reducing a latency by 50% when compared with conventional SAS and SSD manners.

An NVMe storage device includes a controller and a storage unit and is deployed at a proximal end of a CPU, raising relatively high requirements for fields such as power supply and distribution, heat dissipation, and space. In addition, due to a limitation on a quantity of PCIe interfaces of the CPU, a quantity of NVMe storage devices mounted on the CPU is limited and cannot be expanded.

### SUMMARY

Embodiments of the present invention provide an NVMe storage device method and an NVMe storage device. The NVMe storage device includes a control module and a storage module, where the control module is deployed locally near a CPU, the storage module including a storage unit is deployed at a remote end of the CPU, and the control module and the storage module transmit data by using a communications protocol that can implement remote transmission, such as an Ethernet protocol. In this way, the NVMe storage device originally used as a whole is deployed on two sides of the Ethernet after being divided into two portions, which resolves problems in power supply and distribution, heat dissipation, space, and the like of an NVMe storage device in the prior art that are caused when a controller and a storage unit of the NVMe storage device, as a whole, are deployed at a proximal end of a CPU.

To achieve the foregoing objective, the following technical solutions are used in the embodiments of the present invention:
According to a first aspect, an embodiment of the present invention provides an NVMe storage device, where the device includes a control module and a storage module, where the control module is connected to a central processing unit CPU by using a Peripheral Component Interconnect Express PCIe bus;
   the control module is configured to: receive an access request message in a PCIe protocol format sent by the CPU, where the access request message in the PCIe protocol format includes an operation instruction and access address information that is of the CPU; convert the access request message in the PCIe protocol format into an access request message in a second protocol format, where the access request message in the second protocol format includes the operation instruction and the access address information that is of the CPU; and send the access request message in the second protocol format to the storage module; and
   the storage module is configured to: receive the access request message in the second protocol format; convert the access request message in the second protocol format into an access request message in a third protocol format, where the access request message in the third protocol format includes the operation instruction and the access address information that is of the CPU; acquire the operation instruction and the access address information that is of the CPU from the access request message in the third protocol format; and access a storage unit in the storage module according to the operation instruction and the access address information that is of the CPU.

In a first possible implementation manner, with reference to the first aspect, the second protocol format is an Ethernet protocol or a fiber channel protocol.

In a second possible implementation manner, with reference to the first aspect or the first possible implementation manner, the device further includes a switching module, where the switching module is connected to at least one storage module, and the access request message in the PCIe protocol format further includes device identifier information of an NVMe storage module to be accessed by the CPU;
the control module is further configured to determine, according to the device identifier information that is of the NVMe storage module to be accessed by the CPU and that is in the access request message in the PCIe protocol format, device address information of the NVMe storage module to be accessed by the CPU, and add the device address information of the NVMe storage module to be accessed by the CPU into the access request message in the second protocol format; and
the switching module is configured to receive the access request message in the second protocol format sent by the control module, and forward, according to the device address information that is of the NVMe storage module to be accessed by the CPU and that is in the access request message in the second protocol format, the access request message in the second protocol format to the storage module to be accessed by the CPU.

In a third possible implementation manner, with reference to the second possible implementation manner, the control module is specifically configured to:
determine, according to the device identifier information that is of the NVMe storage module to be accessed by the CPU and that is in the access request message in the PCIe protocol format and an address mapping table, the device address information of the NVMe storage module to be accessed by the CPU, where the address mapping table is used to store a correspondence between a device identifier and a device address that are of the at least one storage module.

According to a second aspect, an embodiment of the present invention provides a method for accessing an NVMe storage device, where the method is applied to an NVMe storage device, where the device includes a control module and a storage module, and the control module is connected to a central processing unit CPU by using a Peripheral Component Interconnect Express PCIe bus; and the method includes:
receiving, by the control module, an access request message in a PCIe protocol format sent by the CPU, where the access request message in the PCIe protocol format includes an operation instruction and access address information that is of the CPU;
converting, by the control module, the access request message in the PCIe protocol format into an access request message in a second protocol format, where the access request message in the second protocol format includes the operation instruction and the access address information that is of the CPU;
sending, by the control module, the access request message in the second protocol format to the storage module;
receiving, by the storage module, the access request message in the second protocol format, and converting the access request message in the second protocol format into an access request message in a third protocol format, where the access request message in the third protocol format includes the operation instruction and the access address information that is of the CPU; and
acquiring, by the storage module, the operation instruction and the access address information that is of the CPU from the access request message in the third protocol format, and accessing a storage unit in the storage module according to the operation instruction and the access address information that is of the CPU.

In a first possible implementation manner, with reference to the second aspect, the second protocol format is an Ethernet protocol or a fiber channel protocol.

In a second possible implementation manner, with reference to the second aspect or the first possible implementation manner, the NVMe storage device further includes a switching module, where the switching module is connected to at least one storage module, and the access request message in the PCIe protocol format further includes device identifier information of an NVMe storage module to be accessed by the CPU; and after the control module receives the access request message in the PCIe protocol format sent by the CPU, the method further includes:
determining, by the control module according to the device identifier information that is of the NVMe storage module to be accessed by the CPU and that is in the access request message in the PCIe protocol format, device address information of the NVMe storage module to be accessed by the CPU, and adding the device address information of the NVMe storage module to be accessed by the CPU into the access request message in the second protocol format;
sending, by the control module, the access request message in the second protocol format to the switching module; and
receiving, by the switching module, the access request message in the second protocol format sent by the control module, and forwarding, according to the device address information that is of the NVMe storage module to be accessed by the CPU and that is in the access request message in the second protocol format, the access request message in the second protocol format to the storage module to be accessed by the CPU.

In a third possible implementation manner, with reference to the second possible implementation manner, the determining, by the control module according to the device identifier information that is of the NVMe storage module to be accessed by the CPU and that is in the access request message in the PCIe protocol format, device address information of the NVMe storage module to be accessed by the CPU specifically includes:
determining, by the control module according to the device identifier information that is of the NVMe storage module to be accessed by the CPU and that is in the access request message in the PCIe protocol format and an address mapping table, the device address information of the NVMe storage module to be accessed by the CPU, where the address mapping table is used to store a correspondence between a device identifier and a device address that are of the at least one storage module.

The embodiments of the present invention provide a method for accessing an NVMe storage device and an NVMe storage device, where the device includes a control module and a storage module, where the control module is connected to a central processing unit CPU by using a Peripheral Component Interconnect Express PCIe bus. The control module receives an access request message in a PCIe protocol format sent by the CPU, where the access request message in the PCIe protocol format includes an operation instruction and access address information that is of the CPU; converts the access request message in the PCIe protocol format into an access request message in a second protocol format, where the access request message in the second protocol format includes the operation instruction and the access address information that is of the CPU; and sends the access request message in the second protocol format to the storage module. The storage module receives the access request message in the second protocol format, and converts the access request message in the second protocol format into an access request message in a third protocol format, where the access request message in the third protocol format includes the operation instruction and the access address information that is of the CPU; and acquires the operation instruction and the access address information that is of the CPU from the access request message in the third protocol format, and accesses a storage unit in the storage module according to the operation instruction and the access address information that is of the CPU. In the NVMe storage device, the control module is connected to the central processing unit CPU by using the PCIe bus, and data transmission between the control module and the storage module is implemented by using a second protocol that can implement remote transmission, such as an Ethernet protocol. In this way, the NVMe storage device originally used as a whole is deployed on two sides of the Ethernet after being divided into two portions, that is, the control module is deployed locally near the CPU, and the storage module is deployed at a remote end of the CPU, which therefore resolves problems in power supply and distribution, heat dissipation, space, and the like of an NVMe storage device in the prior art that are caused when a controller and a storage unit of the NVMe storage device, as a whole, are deployed at a proximal end of a CPU.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic diagram of an NVMe storage system provided in the prior art;
FIG. 2 is a schematic diagram of an NVMe storage device according to an embodiment of the present invention;
FIG. 3 is a schematic diagram of another NVMe storage device according to an embodiment of the present invention;
FIG. 4 is a flowchart of a method for accessing an NVMe storage device; and
FIG. 5 is a flowchart of another method for accessing an NVMe storage device.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

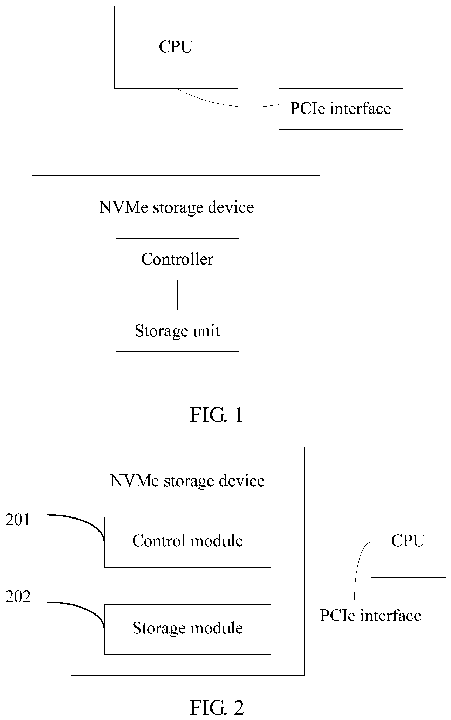

In an existing storage technology, a method for deploying an NVMe storage device is shown in FIG. 1 and includes a central processing unit CPU and an NVMe storage device. The NVMe storage device includes a controller and a storage unit. The controller and the storage unit, as a whole, are mounted on the CPU by using a PCIe interface of the CPU.

Because both the controller and the storage unit of the NVMe storage device have particular requirements for fields such as power supply and distribution, heat dissipation, and space, and the controller and the storage unit, as a whole, are deployed at a proximal end of the CPU, the NVMe storage device has higher requirements for fields such as power supply and distribution, heat dissipation, and space.

With respect to problems in power supply and distribution, heat dissipation, space, and the like of an NVMe storage device in the prior art that are caused when a controller and a storage unit of the NVMe storage device, as a whole, are deployed at a proximal end of a central processing unit CPU, an embodiment of the present invention provides a new NVMe storage device. Referring to FIG. 2, the device includes a control module 201 and a storage module 202, where the control module 201 is connected to a central processing unit CPU by using a Peripheral Component Interconnect Express PCIe bus, and the control module and the storage module transmit data by using a second protocol format that supports remote transmission.

The control module 201 is configured to: receive an access request message in a PCIe protocol format sent by the CPU, where the access request message in the PCIe protocol format includes an operation instruction and access address information that is of the CPU; convert the access request message in the PCIe protocol format into an access request message in a second protocol format, where the access request message in the second protocol format includes the operation instruction and the access address information that is of the CPU; and send the access request message in the second protocol format to the storage module.

To achieve a purpose of deploying the storage module at a remote end of the central processing unit CPU, the control module and the storage module transmit data by using a second protocol, where the second protocol is a network protocol that can implement remote transmission and has a good expansibility feature. Specifically, the second protocol may be an Ethernet protocol or a fiber channel protocol.

When the central processing unit CPU needs to access the storage module of the NVMe storage device, the CPU needs to send an access request message in a PCIe protocol format to the control module, where the access request message in the PCIe protocol format carries a data packet in an NVMe format, and the data packet in the NVMe format includes operation instruction information of the CPU, such as a read operation instruction or a write operation instruction. That is, accessing, by the CPU, the NVMe storage device includes: reading data from the NVMe storage device or storing data in the NVMe storage device. The data packet further includes address information of an NVMe storage module to be accessed by the CPU, that is, the access address information of the CPU.

After the control module receives the access request message in the PCIe protocol format, because the control module and the storage module transmit data by using the second protocol format, specifically, an interface connecting the control module and the storage module is an interface that supports the second protocol format, the control module needs to convert the access request message in the PCIe protocol format into the access request message in the second protocol format, where the access request message in the second protocol format carries the data packet in the NVMe format. The data packet in the NVMe format includes the operation instruction information, such as the read operation instruction and the write operation instruction, and further includes the address information of the NVMe storage module to be accessed by the CPU, that is, the access address information of the CPU.

Specifically, the first processing module may be an application-specific integrated circuit (English: Application Specific Integrated Circuit, ASIC for short), a field-programmable gate array (English: Field-Programmable Gate Array, FPGA for short), or another processing unit, which is not limited in this embodiment of the present invention.

The storage module 202 is configured to: receive the access request message in the second protocol format; convert the access request message in the second protocol format into an access request message in a third protocol format, where the access request message in the third protocol format includes the operation instruction and the access address information that is of the CPU; acquire the operation instruction and the access address information that is of the CPU from the access request message in the third protocol format; and access a storage unit in the storage module according to the operation instruction and the access address information that is of the CPU.

When the storage module receives the access request message in the second protocol format, the storage module needs to convert the access request message in the second protocol format into the access request message in the third protocol format. Specifically, the third protocol format is a protocol format customized by an equipment manufacturer, and may be the PCIe protocol format, the second protocol format, or another protocol format, which is not limited in this embodiment of the present invention. Therefore, after the storage module receives the access request message in the second protocol format, the storage module needs to parse the access request message in the second protocol format. Specifically, a parsing process is as follows:
The storage module converts the access request message in the second protocol format into the access request message in the third protocol format, acquires the operation instruction and the access address information that is of the CPU from the access request message in the third protocol format, and accesses the storage unit in the storage module according to the operation instruction and the access address information that is of the CPU, to implement a read or write operation.

Specifically, a portion that is in the storage module and that performs protocol conversion on the received access request message in the second protocol format may be an application-specific integrated circuit (English: Application Specific Integrated Circuit, ASIC for short), a field-programmable gate array (English: Field-Programmable Gate Array, FPGA for short), or another processing unit, which is not limited in this embodiment of the present invention.

This embodiment of the present invention provides a method for accessing an NVMe storage device and an NVMe storage device, where the device includes a control module and a storage module, where the control module is connected to a central processing unit CPU by using a Peripheral Component Interconnect Express PCIe bus. The control module receives an access request message in a PCIe protocol format sent by the CPU, where the access request message in the PCIe protocol format includes an operation instruction and access address information that is of the CPU; converts the access request message in the PCIe protocol format into an access request message in a second protocol format, where the access request message in the second protocol format includes the operation instruction and the access address information that is of the CPU; and sends the access request message in the second protocol format to the storage module. The storage module receives the access request message in the second protocol format, and converts the access request message in the second protocol format into an access request message in a third protocol format, where the access request message in the third protocol format includes the operation instruction and the access address information that is of the CPU; and acquires the operation instruction and the access address information that is of the CPU from the access request message in the third protocol format, and accesses a storage unit in the storage module according to the operation instruction and the access address information that is of the CPU. In the NVMe storage device, the control module is connected to the central processing unit CPU by using the PCIe bus, and data transmission between the control module and the storage module is implemented by using a second protocol that can implement remote transmission, such as an Ethernet protocol. In this way, the NVMe storage device originally used as a whole is deployed on two sides of the Ethernet after being divided into two portions, that is, the control module is deployed locally near the CPU, and the storage module is deployed at a remote end of the CPU, which therefore resolves problems in power supply and distribution, heat dissipation, space, and the like of an NVMe storage device in the prior art that are caused when a controller and a storage portion of the NVMe storage device, as a whole, are deployed at a proximal end of a CPU.

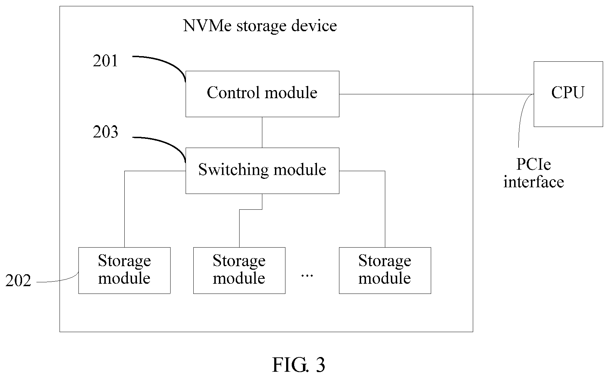

Further, to resolve a problem that a quantity of NVMe storage devices connected to the CPU is limited by a quantity of PCIe interfaces of the CPU, an embodiment of the present invention further provides an NVMe storage device. Referring to FIG. 3, the storage device further includes a switching module 203. The switching module 203 is connected to at least one storage module 202. The access request message in the PCIe protocol format further includes device identifier information of an NVMe storage module to be accessed by the CPU.

The control module 201 is further configured to determine, according to the device identifier information that is of the NVMe storage module to be accessed by the CPU and that is in the access request message in the PCIe protocol format, device address information of the NVMe storage module to be accessed by the CPU, and add the device address information of the NVMe storage module to be accessed by the CPU into the access request message in the second protocol format. The switching module 203 is configured to receive the access request message in the second protocol format sent by the control module, and forward, according to the device address information that is of the NVMe storage module to be accessed by the CPU and that is in the access request message in the second protocol format, the access request message in the second protocol format to the storage module to be accessed by the CPU.

Specifically, the quantity of PCIe interfaces on the central processing unit CPU is limited. For example, if there are three PCIe interfaces on the CPU, the CPU may access a maximum of only three NVMe storage devices. To resolve this problem, the following switching module may be disposed between the control module and the storage module. The switching module supports forwarding of the access request message in the second protocol format used for communication between the control module and the storage module. Multiple interfaces may be disposed on the switching module, so that multiple storage modules can be connected to the switching module. When there is no switching module between the control module and the storage module, the CPU sends an access request message to a control module and can access only one storage module corresponding to the control module. Therefore, the access request message in the PCIe protocol format sent by the CPU carries only the operation instruction information and the access address information that is of the CPU.

However, when the switching module exists between the control module and the storage module, when the CPU sends an access request message to a control module, because the control module corresponds to at least one storage module by using the switching module, the access request message in the PCIe protocol format sent by the CPU to the control module further needs to include the device identifier information, such as device number information, of the storage module to be accessed by the CPU.

When the control module receives the access request message in the PCIe protocol format, the control module needs to convert the device identifier information of the storage module into the device address information of the storage module in the second protocol format. For example, the second protocol format is an Ethernet protocol, and the address information of the storage module is MAC address information of the storage module. The device address information of the storage module is carried in the access request message in the second format.

Specifically, the control module may determine, according to the device identifier information that is of the NVMe storage module to be accessed by the CPU and that is in the access request message in the PCIe protocol format and an address mapping table, the device address information of the NVMe storage module to be accessed by the CPU, where the address mapping table is used to store a correspondence between a device identifier and a device address that are of the at least one storage module.

Certainly, the control module may further convert the device identifier information of the storage module into the device address information in another manner, for example, converting, by using a preset algorithm, the device identifier information of the storage module to be accessed by the CPU into the device address information of the storage module to be accessed by the CPU, which, specifically, is not limited in this embodiment of the present invention.

The control module sends, to the switching module, the access request message in the second protocol format carrying the device address information of the storage module to be accessed by the CPU.

The switching module forwards the access request message in the second protocol format to the storage module according to the device address information, of the storage module to be accessed by the CPU, in the access request message in the second protocol format.

For detailed technical features of the storage module, reference may be made to the foregoing embodiment, and details are not repeatedly described in this embodiment of the present invention. It should be noted that, to enhance reliability of accessing, by the central processing unit CPU, the NVMe device to store or read data, setting for enhancing the reliability is further performed on the NVMe storage device from the following two aspects:
In a first aspect, a retransmission cache is disposed in the control module and the storage module.

Specifically, when the central processing unit CPU accesses the NVMe storage device to read or store data, due to instability of the switching module, a phenomenon of a data read or storage failure may occur. To avoid the foregoing phenomenon, the retransmission cache is disposed in the control module and the storage module. The retransmission cache is configured to: when the central processing unit CPU fails to read or store data, resend the access request message in the PCIe protocol format to the NVMe storage device. The control module converts, in the retransmission cache of the control module, the access request message in the PCIe protocol format into the access request message in the second protocol format, and sends the access request message in the second protocol format to the switching module. The storage module converts, in the retransmission cache of the storage module, the received access request message in the second protocol format sent by the switching module, into the access request message in the third protocol format, and accesses the storage unit in the NVMe storage device according to the operation instruction information and the access address information that is of the CPU that are in the access request message in the third protocol format.

In a second aspect, a flow control mechanism is implemented in the switching module.

Specifically, when an interface of the switching module is congested, the switching module sends a remind message to the central processing unit CPU and the NVMe storage device. The remind message includes that the central processing unit CPU and the NVMe storage device stop sending data to the switching module.

This embodiment of the present invention provides an NVMe storage device, where the device includes a control module, a switching module, and at least one storage module. Data is transmitted between the control module and the switching module and between the switching module and the storage module by using a network protocol that can implement remote transmission, and the NVMe storage device originally used as a whole is deployed on two sides of the Ethernet after being divided into two portions, that is, the control module is deployed locally near a CPU, and the storage module is deployed at a remote end of the CPU, which therefore resolves problems in power supply and distribution, heat dissipation, space, and the like of an NVMe storage device in the prior art that are caused when a controller and a storage portion of the NVMe storage device, as a whole, are deployed at a proximal end of a CPU. In addition, multiple interfaces may be disposed on the switching module to connect to multiple storage devices, which therefore resolves a problem that a quantity of NVMe storage devices accessed by the CPU is limited by a quantity of PCIe interfaces of the CPU.

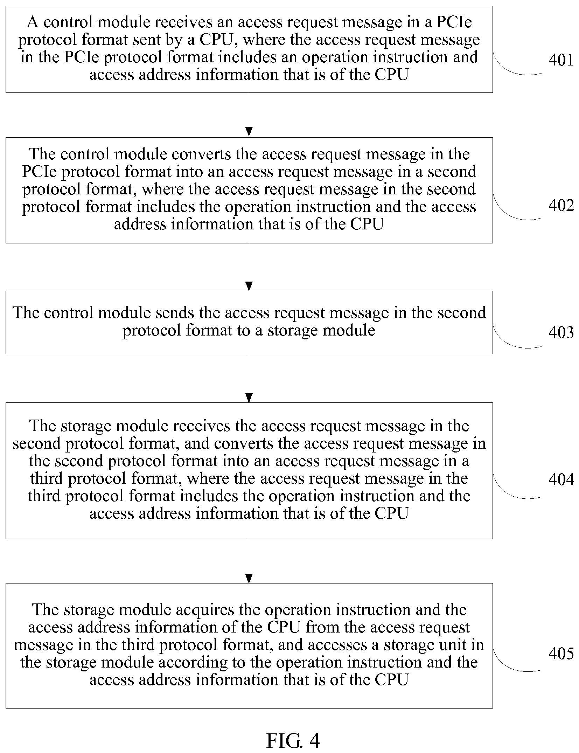

An embodiment of the present invention provides a method for accessing an NVMe storage device. The method is applied to an NVMe storage device, where the device includes a control module and a storage module, where the control module is connected to a central processing unit CPU by using a Peripheral Component Interconnect Express PCIe bus. Referring to FIG. 4, the method includes:
401: The control module receives an access request message in a PCIe protocol format sent by the CPU, where the access request message in the PCIe protocol format includes an operation instruction and access address information that is of the CPU.
402: The control module converts the access request message in the PCIe protocol format into an access request message in a second protocol format, where the access request message in the second protocol format includes the operation instruction and the access address information that is of the CPU.
403: The control module sends the access request message in the second protocol format to the storage module.
404: The storage module receives the access request message in the second protocol format, and converts the access request message in the second protocol format into an access request message in a third protocol format, where the access request message in the third protocol format includes the operation instruction and the access address information that is of the CPU.
405: The storage module acquires the operation instruction and the access address information that is of the CPU from the access request message in the third protocol format, and accesses a storage unit in the storage module according to the operation instruction and the access address information that is of the CPU.

Specifically, for detailed technical features of this method embodiment, reference may be made to the foregoing embodiment of the NVMe storage device, and details are not repeatedly described in this embodiment of the present invention.

This embodiment of the present invention provides a method for accessing an NVMe storage device. In the method, a control module is connected to a central processing unit CPU by using a PCIe bus, data transmission between the control module and a storage module is implemented by using a second protocol that can implement remote transmission, such as an Ethernet protocol, and an NVMe storage device originally used as a whole is deployed on two sides of the Ethernet after being divided into two portions, that is, the control module is deployed locally near the CPU, and the storage module is deployed at a proximal end of the CPU, which therefore resolves problems in power supply and distribution, heat dissipation, space, and the like of an NVMe storage device in the prior art that are caused when a controller and a storage portion of the NVMe storage device, as a whole, are deployed at a proximal end of a CPU.

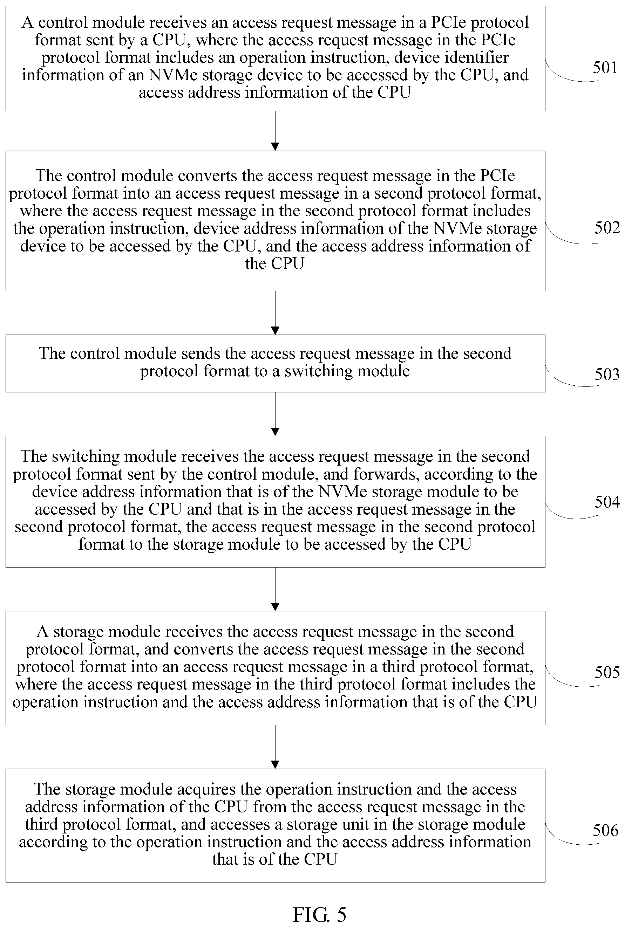

Further, to resolve a problem that a quantity of NVMe storage devices connected to the CPU is limited by a quantity of PCIe interfaces of the CPU, an embodiment of the present invention further provides a method for accessing an NVMe storage device. Referring to FIG. 5, the method includes:
501: The control module receives the access request message in the PCIe protocol format sent by the CPU, where the access request message in the PCIe protocol format includes the operation instruction, device identifier information of an NVMe storage device to be accessed by the CPU, and access address information of the CPU.
502: The control module converts the access request message in the PCIe protocol format into the access request message in the second protocol format, where the access request message in the second protocol format includes the operation instruction, device address information of the NVMe storage device to be accessed by the CPU, and the access address information of the CPU.

Specifically, the control module determines, according to the device identifier information that is of the NVMe storage module to be accessed by the CPU and that is in the access request message in the PCIe protocol format and an address mapping table, the device address information of the NVMe storage module to be accessed by the CPU, where the address mapping table is used to store a correspondence between a device identifier and a device address that are of at least one storage module.
503: The control module sends the access request message in the second protocol format to the switching module.
504: The switching module receives the access request message in the second protocol format sent by the control module, and forwards, according to the device address information that is of the NVMe storage module to be accessed by the CPU and that is in the access request message in the second protocol format, the access request message in the second protocol format to the storage module to be accessed by the CPU.
505: The storage module receives the access request message in the second protocol format, and converts the access request message in the second protocol format into the access request message in the third protocol format, where the access request message in the third protocol format includes the operation instruction and the access address information that is of the CPU.
506: The storage module acquires the operation instruction and the access address information that is of the CPU from the access request message in the third protocol format, and accesses a storage unit in the storage module according to the operation instruction and the access address information that is of the CPU.

Specifically, for a detailed implementation process of this method embodiment, reference may be made to the foregoing embodiment of the NVMe storage device, and details are not repeatedly described in this embodiment of the present invention.

This embodiment of the present invention provides a method for accessing an NVMe storage device, where the method is applied to an NVMe storage device, and the device includes a control module, a switching module, and at least one storage module. Data is transmitted between the control module and the switching module and between the switching module and the storage module by using a network protocol that can implement remote transmission, such as an Ethernet protocol, and the NVMe storage device originally used as a whole is deployed on two sides of the Ethernet after being divided into two portions, that is, the control module is deployed locally near a CPU, and the storage module is deployed at a remote end of the CPU, which therefore resolves problems in power supply and distribution, heat dissipation, space, and the like of an NVMe storage device in the prior art that are caused when a controller and a storage portion of the NVMe storage device, as a whole, are deployed at a proximal end of a CPU. In addition, multiple interfaces may be disposed on the switching module to connect to multiple storage devices, which therefore resolves a problem that a quantity of NVMe storage devices accessed by the CPU is limited by a quantity of PCIe interfaces of the CPU.

A person of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. An NVMe storage device, wherein the device comprises a control module and a storage module, wherein the control module is connected to a central processing unit, CPU by using a Peripheral Component Interconnect Express, PCIe bus;
the control module is configured to: receive an access request message in a PCIe protocol format sent by the CPU, wherein the access request message in the PCIe protocol format comprises an operation instruction and access address information that is of the CPU; convert the access request message in the PCIe protocol format into an access request message in a second protocol format, wherein the access request message in the second protocol format comprises the operation instruction and the access address information that is of the CPU; and send the access request message in the second protocol format to the storage module; and
the storage module is configured to: receive the access request message in the second protocol format; convert the access request message in the second protocol format into an access request message in a third protocol format, wherein the access request message in the third protocol format comprises the operation instruction and the access address information that is of the CPU; acquire the operation instruction and the access address information that is of the CPU from the access request message in the third protocol format; and access a storage unit in the storage module according to the operation instruction and the access address information that is of the CPU.

2. The NVMe storage device according to claim 1, wherein the second protocol format is an Ethernet protocol or a fiber channel protocol.

3. The NVMe storage device according to claim 1 or 2, wherein the device further comprises a switching module, wherein the switching module is connected to at least one storage module, and the access request message in the PCIe protocol format further comprises device identifier information of an NVMe storage module to be accessed by the CPU;
the control module is further configured to determine, according to the device identifier information that is of the NVMe storage module to be accessed by the CPU and that is in the access request message in the PCIe protocol format, device address information of the NVMe storage module to be accessed by the CPU, and add the device address information of the NVMe storage module to be accessed by the CPU into the access request message in the second protocol format; and
the switching module is configured to receive the access request message in the second protocol format sent by the control module, and forward, according to the device address information that is of the NVMe storage module to be accessed by the CPU and that is in the access request message in the second protocol format, the access request message in the second protocol format to the storage module to be accessed by the CPU.

4. The NVMe storage device according to claim 3, wherein the control module is specifically configured to:
determine, according to the device identifier information that is of the NVMe storage module to be accessed by the CPU and that is in the access request message in the PCIe protocol format and an address mapping table, the device address information of the NVMe storage module to be accessed by the CPU, wherein the address mapping table is used to store a correspondence between a device identifier and a device address that are of the at least one storage module.

5. A method for accessing an NVMe storage device, wherein the method is applied to an NVMe storage device, wherein the device comprises a control module and a storage module, and the control module is connected to a central processing unit CPU by using a Peripheral Component Interconnect Express PCIe bus; and the method comprises:
receiving, by the control module, an access request message in a PCIe protocol format sent by the CPU, wherein the access request message in the PCIe protocol format comprises an operation instruction and access address information that is of the CPU;
converting, by the control module, the access request message in the PCIe protocol format into an access request message in a second protocol format, wherein the access request message in the second protocol format comprises the operation instruction and the access address information that is of the CPU;
sending, by the control module, the access request message in the second protocol format to the storage module;
receiving, by the storage module, the access request message in the second protocol format, and converting the access request message in the second protocol format into an access request message in a third protocol format, wherein the access request message in the third protocol format comprises the operation instruction and the access address information that is of the CPU; and
acquiring, by the storage module, the operation instruction and the access address information that is of the CPU from the access request message in the third protocol format, and accessing a storage unit in the storage module according to the operation instruction and the access address information that is of the CPU.

6. The method according to claim 5, wherein the second protocol format is an Ethernet protocol or a fiber channel protocol.

7. The method according to claim 5 or 6, wherein the NVMe storage device further comprises a switching module, wherein the switching module is connected to at least one storage module, and the access request message in the PCIe protocol format further comprises device identifier information of an NVMe storage module to be accessed by the CPU; and after the control module receives the access request message in the PCIe protocol format sent by the CPU, the method further comprises:
determining, by the control module according to the device identifier information that is of the NVMe storage module to be accessed by the CPU and that is in the access request message in the PCIe protocol format, device address information of the NVMe storage module to be accessed by the CPU, and adding the device address information of the NVMe storage module to be accessed by the CPU into the access request message in the second protocol format;
sending, by the control module, the access request message in the second protocol format to the switching module; and
receiving, by the switching module, the access request message in the second protocol format sent by the control module, and forwarding, according to the device address information that is of the NVMe storage module to be accessed by the CPU and that is in the access request message in the second protocol format, the access request message in the second protocol format to the storage module to be accessed by the CPU.

8. The method according to claim 7, wherein the determining, by the control module according to the device identifier information that is of the NVMe storage module to be accessed by the CPU and that is in the access request message in the PCIe protocol format, device address information of the NVMe storage module to be accessed by the CPU specifically comprises:
determining, by the control module according to the device identifier information that is of the NVMe storage module to be accessed by the CPU and that is in the access request message in the PCIe protocol format and an address mapping table, the device address information of the NVMe storage module to be accessed by the CPU, wherein the address mapping table is used to store a correspondence between a device identifier and a device address that are of the at least one storage module.
